# Europäisches Patentamt
## European Patent Office
### Office européen des brevets

(11) Publication number: **0 185 818 B1**

(12) **EUROPEAN PATENT SPECIFICATION**

(45) Date of publication of patent specification: **07.03.90**

(21) Application number: **84309099.4**

(22) Date of filing: **27.12.84**

(51) Int. Cl.⁵: **B 60 R 25/02**

(54) Keyless steering lock.

(43) Date of publication of application:
**02.07.86 Bulletin 86/27**

(45) Publication of the grant of the patent:
**07.03.90 Bulletin 90/10**

(84) Designated Contracting States:
**DE FR GB**

(56) References cited:
**EP-A-0 121 165**
**DE-A-2 916 559**

**PATENT ABSTRACTS OF JAPAN, vol. 8, no. 100 (M-295) 1537r, 11th May 1984; & JP - A - 59 14 551 (KOKUSAN KINZOKU KOGYO K.K.) 25.01.1984**

(73) Proprietor: **KOKUSAN KINZOKU KOGYO KABUSHIKI KAISHA**
**2-8-2, Kamata**
**Ota-ku Tokyo (JP)**

(72) Inventor: **Nara, Etuo**
**3-17-7, Omori-Naka**
**Ohta-ku Tokyo (JP)**

(74) Representative: **Barker, Rosemary Anne et al**
**Barlow, Gillett & Percival 94 Market Street**
**Manchester M1 1PJ (GB)**

Courier Press, Leamington Spa, England.

## Description

This invention relates to a keyless steering lock wherein a shaft-locking and unlocking bar is operated from an electric motor through a reduction gear and a rotator.

Covnentionally, steering locks have been designed as mechanical locks which are key-operated for locking and unlocking. German Specification DE 2916559 describes such a lock wherein the locking bar is shifted by a sector cam.

More recently, however, keyless steering locks have been developed in which the operator actuates a plurality of specifically selected switches, e.g. buttons, in sequence so as to automatically unlock the lock and render the steering shaft operable as desired by the operator. In such an arrangement, a locking and unlocking bar is driven by an electric motor by way of gearing and a rotator, the latter having a cam portion of some sort for actuation of the bar in the desired sense, that is to say either in the shaft-locking or -unlocking direction, as the case may be.

According to our experience, however, it is extremely difficult to control precisely rotation of the rotator, so as to exactly position the latter at the desired shaft-locking or unlocking position, on account of likely over-running of the motor or frictional resistance of co-operating parts. This in turn often leads to excess or insufficient advancement of the locking bar and thus to the possibility of malfunction of the lock.

In the field of control engineering, stepping motors are widely used for suppression of such disadvantageous over-running or premature stopping. Such stepping motors are, however, much too large and much too expensive commercially for use in keyless stearing locks.

It is, therefore, an object of the present invention to provide an improved keyless steering lock which can operate in a highly precise manner without excess or insufficient advancement of the shaft-locking and unlocking bar.

The object is achieved in accordance with the present invention by provision of an improved keyless steering lock of the type mentioned in the first paragraph hereto and wherein the rotator has a cam portion for actuation of the bar, characterised in that the rotator ends short of the bar, in that a hanger member movable in unison with the bar and overhanging therefrom in the direction of the rotator is provided as well as spring means urging the hanger member and the bar together towards a shaft-locking position in engagement with the shaft and urging the overhanging portion of the hanger member into co-operating contact with the cam portion of the rotator, and in that the cam portion consists of a sector cam having an apex upon which the hanger member impinges in the shaft-locking position and an arcuate region upon which the hanger member impinges in the shaft-unlocking position.

Advantageously, the sector angle measured at the apex of the sector cam is from 15 to 150 degrees, most preferably about 90 degrees.

The invention will be described further, by way of example, with reference to the accompanying drawings, in which:

Fig. 1 is a sectional elevation of a preferred embodiment of the steering lock of the invention;

Fig. 2 is a top plan view of the steering lock shown in Fig. 1, the lid or cover having been omitted for more clear illustration of the inside arrangement;

Fig. 3 is an enlarged sectional view of the bearing arrangement for the steering shaft in the steering lock shown in Fig. 1;

Fig. 4 is a slightly enlarged section taken along the section line A—A' shown in Fig. 2; and

Fig. 5 is an end view of the rotator carrying the sector cam in the steering lock shown in Figs. 1 to 4.

In the drawings, which illustrate a preferred embodiment of the steering lock of the invention, a conventional steering shaft 10 is rotatably supported by a ball bearing unit 12 positively supported in a lock housing 13. This housing 13 is formed with a hollow cylindrical portion 14 in which the bearing unit 12 is mounted, for example, by a pressure or push-in fit.

In the upper part of the housing 13, a guide opening 17 is arranged in communication with the hollow cylindrical space 14 and container chambers 15. The upper part of the housing 13 is tightly and rigidly closed by a lid 16 which is a removable snap-fit or pressure fit therein for the purpose of theft-prevention.

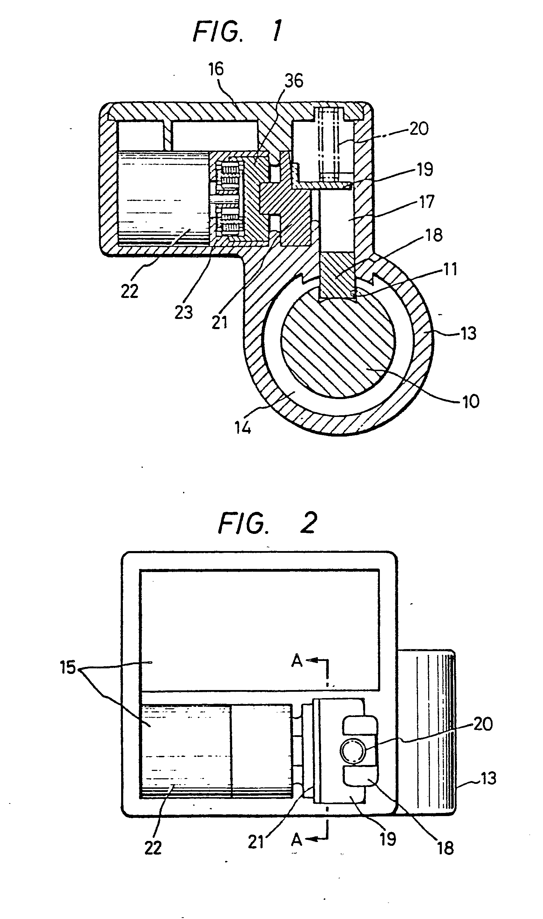

A locking bar 18 is slidably mounted in the guide opening 17, the bar 18 being shown in Fig. 1 a its advanced and locking position in engagement with a reception recess 11 formed on the steering shaft 10. A so-called "hanger-member" 19 is attached to the locking bar 18 and slides in unison therewith. The hanger member 19 may be directly fixed to the bar 18.

A compression coil spring 20 is mounted between lid 16 and hanger member 19 under compression and thus urges the bar 18 to move downwards in Fig. 1.

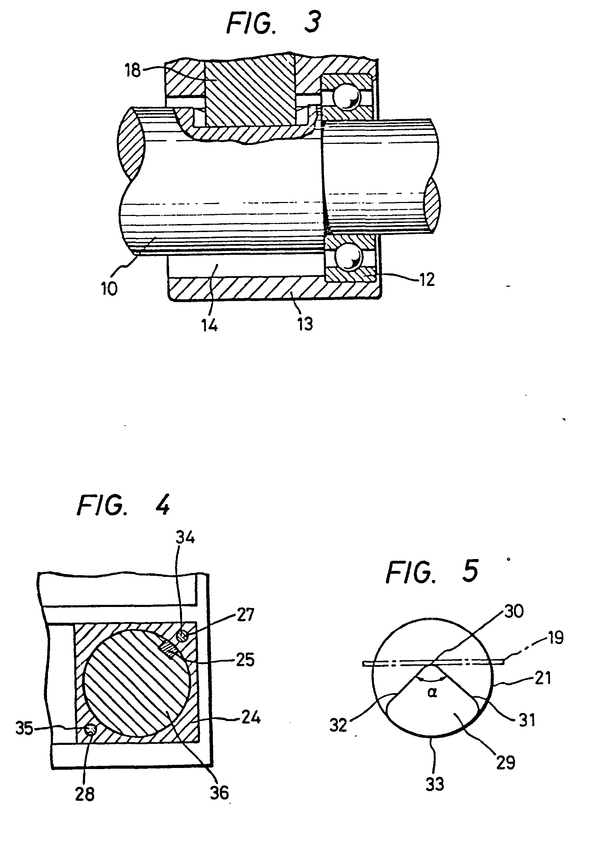

A member 21 called "a rotator" is held in pressure contact with the hanger member 19, as is clearly shown in Fig. 5 in side view. This rotator 21 acts to prevent excess or insufficient advancement of the bar 18, as will be described more fully later.

An electric motor 22, a gearing unit 23 and an output shaft 36 thereof are mounted in the housing 13 as shown. Rotation is transmitted from the motor 22 through the gearing unit 23 to the output shaft 36. The gearing unit 23 is housed in a casing 24 which is shown in cross-section in Fig. 4.

In the casing 24 two diametrically opposite openings 27 and 28 are provided for housing respective contactless (reed) switches 34 and 35. The former switch 34 is adapted for sensing the shaft-unlocking position of the bar 18, while the latter switch 35 senses the shaft-locking position of the bar 18.

When the motor 22 is energized to rotate, output torque is transmitted therefrom through the reduction gearing 23 to the output shaft 36, a mechanical coupling being provided between the latter and the rotator 21 to the hanger member 19 and thence to the locking bar 18, so as to raise the latter from its locking position shown in Fig. 1 towards its unlocking upper position.

As shown in Fig. 5, the rotator 21 is formed with a sector cam 29, having a cam angle alpha between side slopes 31 and 32, measured around an apex 30, of substantially 15 to 150 degrees, most preferably about 90 degrees.

In the shaft-locking position, the switch 35 is positioned nearest to a shaft-position indicator magnet (25) in or on the rotator 21, or the output shaft 36 as shown in Fig. 4, so as to energize that switch. At the same time, the other switch 34 is remote from the same magnet 25, so that switch 34 is de-energized.

When a certain switch (not shown) is turned on, the motor 22 is rotated and motion is transmitted therefrom through the reduction gearing 23, the output shaft 36 and the coupling to the rotator 21. Motion is further transmitted from the cam 29 of the rotator 21 to the hanger member 19 which is fixedly attached to the locking bar 18 so as to raise the latter, as indicated in Fig. 1, towards its unlocking position.

As the bar 18 moves towards its unlocking position, the magnet 25 is brought towards its position adjacent to the switch 34 which senses the unlocking position and de-energizes the motor 22 by causing opening of the on-off switch (not shown) for the latter.

In this way, precise locking and unlocking operations can be assured, the shape of the sector cam 29 being of particular importance in this respect.

In place of the aforementioned read switches 34, 35, microswitches may be used if desired.

It will be clear from the foregoing detailed description that with the improved steering shaft-lock according to the present invention which incorporates a rotator provided with a specifically designed sector cam an accurate shaft-locking and unlocking operation can be assured, even if the motor should make an over-running or the rotator should stop at inaccurate shaft-locking or -unlocking positions.

## Claims

1. A keyless steering shaft lock wherein a shaft-locking and unlocking bar (18) is operated by an electric motor (22) by way of reduction gearing (23) and a rotator, the later having a cam portion (29) for actuation of the bar (18) in the shaft-locking and unlocking directions, characterised in that the rotator (21) ends short of the bar (18), in that a hanger member (19) movable in unison with the bar (18) and overhanging therefrom in the direction of the rotator is provided as well as spring means (20) urging the hanger member (19) and the bar together towards a shaft-locking position in engagement with the shaft (10) and urging the overhanging portion of the hanger member (19) into cooperating contact with the cam portion (29) of the rotator (21), and in that the cam portion consists of a sector cam having an apex (30) upon which the hanger member (19) impinges in the shaft-locking position and an arcuate region (33) upon which the hanger member (19) impinges in the shaft-unlocking position.

2. A keyless steering-shaft lock as claimed in Claim 1 wherein the sector cam (29) has a sector angle (x), measured at the apex (30) thereof, of from 15 to 150°, most preferably about 90 degrees.

3. A keyless steering-shaft lock as claimed in Claim 1 or 2, characterised in that outout means (36) of the gearing (23) or the rotator (21) is provided with magnet means (25) embedded therein or mounted thereon, and at least one magnetically responsive element (34, 35) energizable by proximity of said magnet means (25) is/are fixedly provided in or on the casing (24) for sensing the locking and unlocking positions of the bar (18).

4. A keyless steering-shaft lock as claimed in Claim 3 wherein the magnetically responsive elements consists of a pair of swiches (34, 35) arranged diametrically opposite to each other relative to the centre of the output means (36), the switches being energized by one and the same magnet (25).

## Patentansprüche

1. Schlüsselloses Lenkschloß, bei dem eine Spindelverriegelungs- und -entriegelungsstange (18) durch einen Elektromotor (22) mittels Reduktionsgetriebe (23) und einen Rotor betrieben wird, wobei der letztere einen Nockenteil (29) zur Bewegung der Stange (18) in die Spindelverriegelungs- und -entriegelungsrichtungen aufweist, dadurch gekennzeichnet, daß der Rotor (21) kurz vor der Stange (18) endet, daß ein in Einklang mit der Stange (18) bewegbares und davon in Richtung des Rotors überstehendes Hängerelement (19) sowie Federmittel (20) vorgesehen sind, die das Hängerelement (19) und die Stange zusammen in eine Spindelverriegelungsposition im Eingriff mit der Spindel (10) drängen und den überstehenden Teil des Hängerelements (19) in Wirkverbindung mit dem Nockenteil (29) des Rotors (21) drängen, und daß der Nockenteil aus einem Sektornocken, der einen Scheitelpunkt (30) aufweist, auf den das Hängerelement (19) in der Spindelverriegelungsposition auftrifft, und aus einem gebogenen Bereich (33) besteht, auf den das Hängerelement (19) in der Spindelentriegelungsposition auftrifft.

2. Schlüsselloses Lenkschloß nach Anspruch 1, bei dem der Sektornocken (29), gemessen an seinem Scheitelpunkt (30), einen Sektorwinkel (x) von 15 bis 150°, vorzugsweise ca. 90°, aufweist.

3. Schlüsselloses Lenkschloß nach Anspruch 1 oder 2, dadurch gekennzeichnet, daß Abtriebsmittel (36) des Getriebes (23) oder der Rotor (21) mit Magnetmitteln (25) versehen sind, die darin eingebaut oder darauf angebracht sind; und zumindest ein magnetisch ansprechendes Element (34,
35), das durch die Nähe der Magnetmittel (25)
erregbar ist, in oder auf dem Gehäuse (24) stationär vorgesehen ist, um die Verriegelungs- und
Entriegelungspositionen der Stange (18) zu erfassen.

4. Schlüsselloses Lenkschloß nach Anspruch 3,
bei dem die magnetisch ansprechenden Elemente
aus einem Paar von Schaltern (34, 35) bestehen,
die einander diametral entgegengesetzt relativ
zur Mitte der Abtriebsmittel (36) angeordnet sind,
wobei die Schalter durch ein und denselben
Magneten (25) erregt werden.

## Revendications

1. Dispositif de blocage de colonne de direction
sans clé dans lequel une barrette (18) de blocage
et déblocage de la colonne est actionnée par un
moteur électrique (22) par l'intermédiaire d'un
réducteur de vitesse à engrenages (23) et d'un
rotateur (21), ce dernier ayant une partie came
(29) pour l'actionnement de la barrette (18) dans
le sens de blocage et le sens de déblocage de la
colonne, caractérisé par le fait que le rotateur (21)
se termine à peu de distance de la barrette (18),
qu'il est prévu en élément saillant ou "taquet"
(19) mobile de concert avec la barrette (18) et
surplombant celle-ci en direction du rotateur et un
moyen élastique (20) rappelant ensemble le
taquet (19) et la barrette vers une position de
blocage de la colonne (10) en prise avec celle-ci et
rappelant la partie surplombante du taquet (19)
en contact coopérant avec la partie came (29) du
rotateur (21), et que cette partie came est constituée d'une came en forme de secteur ayant un
sommet (30) sur lequel le taquet (19) repose dans
la position de blocage de la colonne et une région
arquée (33) sur laquelle le taquet (19) repose dans
la position de déblocage de la colonne.

2. Dispositif de blocage de colonne de direction
sans clé selon la revendication 1, dans lequel la
came en forme de secteur (29) présente un angle
(α) au sommet (30) de 15 à 150 degrés et de
préférence d'environ 90 degrés.

3. Dispositif de blocage de colonne de direction
sans clé selon l'une des revendications 1 et 2,
caractérisé par le fait que le moyen de sortie (36)
du réducteur de vitesse à engrenages (23) ou le
rotateur (21) est pourvu d'un moyen magnétique
(25) noyé dedans ou monté dessus, et au moins
un élément sensible magnétiquement (34, 35),
excitable par proximité de ce moyen magnétique
(25), est prévu, fixe, dans ou sur le logement (24)
pour la détection des positions de blocage et de
déblocage de la barrette (18).

4. Dispositif de blocage de colonne de direction
sans clé selon la revendication 3, dans lequel les
éléments sensibles magnétiquement sont deux
interrupteurs (34, 35) placés diamétralement
opposés relativement au centre du moyen de
sortie (36), ces interrupteurs étant excités par un
seul et même aimant (25).

FIG. 1

FIG. 2

FIG. 3

FIG. 4

FIG. 5